# EUROPÄISCHE PATENTANMELDUNG

(11) **EP 4 807 882 A1**
(43) Veröffentlichungstag der Anmeldung: **16.09.2026**
(21) Anmeldenummer: 25163811.0
(22) Anmeldetag: 14.03.2025
(51) Int. Cl.: H01M 50/403, H01M 50/44, H01M 50/443, H01M 50/437, H01M 50/42, H01M 50/414, H01M 50/426

(54) **VERFAHREN ZUR HERSTELLUNG EINES BATTERIESEPARATOR, BATTERIESEPARATOR UND DESSEN VERWENDUNG**

(71) Anmelder: VITRULAN Textile Glass GmbH, 95509 Marktschorgast (DE)
(72) Erfinder: Die Erfindernennung liegt noch nicht vor
(74) Vertreter: Pfenning, Meinig & Partner mbB

(57) **Zusammenfassung**

Die vorliegende Erfindung betrifft ein Verfahren zur Herstellung eines Batterieseparators aus einer selbsttragenden Struktur, wobei der Batterieseparator mindestens eine glasbasierte Komponente und mindestens einen Binder umfasst. Weiterhin betrifft die vorliegende Erfindung einen entsprechenden Batterieseparator sowie dessen Verwendung in einer Batterie.

## Beschreibung

Die vorliegende Erfindung betrifft ein Verfahren zur Herstellung eines Batterieseparators aus einer selbsttragenden Struktur, wobei der Batterieseparator mindestens eine glasbasierte Komponente und mindestens einen Binder umfasst. Weiterhin betrifft die vorliegende Erfindung einen entsprechenden Batterieseparator sowie dessen Verwendung in einer Batterie.

Batterieseparatoren sind aus dem Stand der Technik bekannt, häufig werden polymerbasierte, mikroporöse Folien oder Gewebe als Separatoren für Batterien, insbesondere für Lithium-Ionen Batterien eingesetzt. Diese Separatoren können aus mehreren Lagen unterschiedlicher Polymere mit unterschiedlichen Schmelzpunkten bestehen.

WO 2014047126 A1 beschreibt Batterieseparatoren, die das Dendritenwachstum und interne Kurzschlüsse auf Grund des Dendritenwachstums verhindern. Diese Separatoren weisen mindestens eine Polyethylenschicht mit einer Dicke von gleich oder weniger als etwa 6 µm auf.

DE 10 21011 003 186 A1 betrifft eine Polymerfasern aufweisende Folie, deren Polymerfasern zumindest an den Überkreuzungspunkten zwischen den Poren miteinander verschweißt, oder kraft- oder formschlüssig miteinander verbunden sind, ein Verfahren zu deren Herstellung, sowie deren Verwendung, insbesondere als Batterieseparatoren.

Die polymerbasierten Separatoren sind jedoch nur bis zu Temperaturen von weit unter 200 °C mechanisch stabil und zeigen bereits ab 100 °C einen deutlichen Schrumpf, sodass die Funktion der physischen Trennung der Elektroden nicht mehr gewährleistet ist. Außerdem zeigen die polymerbasierten Separatoren eine schlechte Benetzung gegenüber der Elektrolytflüssigkeit.

Neben den polymerbasierten Separatoren werden im Stand der Technik auch keramikbasierte Separatormaterialien beschrieben. DE 103 47 566 A1 betrifft einen Separator für eine elektrochemische Zelle, der einen flexiblen, durchbrochenen Träger mit einer keramischen Beschichtung umfasst. Diese Beschichtung enthält 75 bis 99 Massenanteile Oxidpartikel und 1 bis 25 Massenanteile Zeolith-Partikel. Für die keramikbasierten Batterieseparatoren wird eine etwas höhere Temperaturstabilität von bis zu 250 °C erreicht.

Auch glasbasierte Batterieseparatoren wurden bereits beschrieben. WO 2010149265 A1 betrifft einen Batterieseparator mit einer porösen, ionenpermeablen Glasscheibe oder einer porösen, ionenpermeable Glaskeramikscheibe, wobei die Scheibe eine mittlere Porengröße von weniger als 1 µm und eine Dicke von weniger als 0,3 mm aufweist.

US 5,468,572 beschreibt Verfahren zur Herstellung einer ventilgesteuerten Blei/Säure-Batterie, welche aus einem Batteriegehäuse und wenigstens einer aus einem Glasfasern enthaltenden Separator bestehenden Zelle, wenigstens einer positiven Elektrode, wenigstens einer negativen Elektrode und einer in den Elektroden und im Separator enthaltenen Elektrolytmenge besteht.

WO 2016210225 A1 betrifft spezielle Glasmatten oder Separatoren für Batterien. Diese Glasmatten können aus unlöslichen Glasfasern hergestellt werden, die mit löslichen Materialien gemischt werden.

WO 2013045350 A1 beschreibt die Verwendung eines Materials auf Glasbasis als Additiv oder Füllstoff für einen wiederaufladbaren Lithium-Ionen Akkumulator.

US 20130157109 A1 betrifft einen Separator umfassend Glasplättchen und Fasermaterialien. Die Porosität dieser Glasplättchen liegt zwischen 70 und 95% und der durchschnittliche Partikeldurchmesser liegt zwischen 15 und 200 µm.

US 20080124559 A1 beschreibt Glasplättchen, die insbesondere in Beschichtungsmaterialien, Tintenzusammensetzungen und Kosmetika verwendet werden, aber die auch für den Einsatz in Batterieseparatoren in Frage kommen.

Glasbasierte Separatoren sind als Fasermatten, welche sehr dick sind oder als poröse Glasplatten, welche mechanisch unflexibel sind, bekannt. Die Separatoren auf Basis von Glasplättchen hingegen weisen eine sehr hohe Porosität auf oder es wird gar keine Größe der Glasplättchen definiert. Zudem weisen die Glasplättchen eine Glaszusammensetzung auf, die es nicht erlaubt, dass Ionen, insbesondere Natrium, aus dem Glas an Elektrodenreaktionen teilnehmen.

Weiterhin stellen die aus dem Stand der Technik bekannten Separatoren meist inaktive Bauteile der Batteriezelle dar, welche zwar zum Gewicht und der Größe der Zelle beitragen, die jedoch keine elektrochemischen Aufgaben erfüllen.

WO 2013045350 beschreibt ein Material auf Glasbasis als Additiv für einen wiederaufladbaren Lithium-Ionen-Akkumulator, um die Hochratenfähigkeit zu verbessern, wobei das Material auf Glasbasis zumindest folgende Bestandteile enthält (in Gew.-% auf Oxidbasis): Summe aus SiO₂ + F + P₂0₅ = 20 - 95; Al₂O₃ = 0 - 30 und die Dichte vorzugsweise kleiner als 5 g/cm³ ist.

In WO 2018185075 bzw. US 20200185679 A1 ist ein glasbasierter Batterieseparator beschrieben, welcher durch einen Verbund aus Glaspartikeln, Binder und einem Trägermaterial aus Glasfasern gekennzeichnet ist, wobei die Glasfasern hier zu Vliesen, Gelegen, Gewirken, Geweben und/oder Mischungen verarbeitet sind. Eine Funktionalisierung des Separators durch geschickte Wahl der Glaszusammensetzung der eingesetzten Partikel wird vorgeschlagen. Die Dicke des Batterieseparators ist hierbei durch die Trägerstruktur vorgegeben und liegt typischerweise bei deutlich über 100 µm.

US 10,777,797 betrifft ein Glasfaservlies mit Einzelfaserdurchmessern von kleiner 6 µm, welches durch eine polymere Binderphase stabilisiert wird. Der polymere Binder weist dabei außerdem die Eigenschaft auf eine Schmelzphase bei überhöhten Temperaturen zu bilden und dadurch die Porosität der Fasermatte zu verschließen und dadurch die elektrochemischen Reaktionen der Batterie zu unterbrechen und ein thermisches Durchgehen zu verhindern.

US 8,592089 B2 betrifft die Erhöhung der Porosität von polyethylenbasierten Separator für Blei-Säure batterien durch Verwendung eines im Batterieelektrolyten löslichen Porenbildners, wodurch die Ionendurchlässigkeit des Separators verbessert wird.

Die Schrift "A thin inorganic composite separator for lithium-ion batteries" von Zhang, Y. et al. aus dem Jahr 2016 beschreibt die Herstellung eines Batterieseparators über ein Gießverfahren eines wasserbasierten Systems, welches Al₂O₃-Partikel, polymeren Binder und Polyethylenglykol enthält. Die Herstellung erfolgt dabei auf Flachglas-Substraten. Durch Entfernung des Polythylenglykols mittels Immersion in einem Wasserbad kann die für die Anwendung erforderliche Porosität im Batterieseparator erzielt werden.

WO2016165796 A1 beschreibt Trägerfolien aus Polyethylenterephthalat (PET), welche während der Folienextrusion mit einer Oberflächenbeschichtung versehen werden, wodurch gezielt Eigenschaften wie Benetzbarkeit und Trennwert der Folie eingestellt werden.

In WO 2018078189 A1 ist die Verwendung einer Verbundfolie zur Beschichtungsübertragung dargelegt, wobei hier ein Beschichtungsstoff auf eine mit einer siliziumorganischen Schicht versehene Trägerfolie aufgebracht wird und anschließend auf ein Kunststoffteil übertragen werden kann.

Ausgehend davon bestand die Aufgabe der vorliegenden Erfindung darin, ein Verfahren zur Herstellung von Batterieseparatoren als selbsttragende Struktur über eine kolloidale Prozessroute bereit zu stellen, das mit einfacher Prozesstechnologie umsetzbar ist. Diese Batterieseparatoren sollen eine Temperaturstabilität von mindestens 500 °C aufweisen.

Diese Aufgabe wird durch das Verfahren mit den Merkmalen des Anspruchs 1, den Batterieseparator mit den Merkmalen des Anspruchs 9 und dessen Verwendung mit den Merkmalen des Anspruchs 14 gelöst.

Erfindungsgemäß wird ein Verfahren zur Herstellung eines Batterieseparators aus einer selbsttragenden Struktur mit folgenden Schritten bereitgestellt:
(a) Bereitstellen einer Folie als Trägerstruktur
(b) Herstellen eines wässrigen Schlickers enthaltend oder bestehend aus:
   (A) 1 bis 99 Gew.-% Glaskurzfasern,
   (B) 1 bis 99 Gew.-% Glaspartikel mit einer mittleren Dicke von 0,05 µm bis 30 µm,
   (C) 1 bis 35 Gew.-% mindestens eines Binders,
   (D) 0 bis 15 Gew.-% mindestens eines Additivs
   wobei sich die Komponenten (A), (B), (C) und (D) und das Lösungsmittel Wasser auf 100 Gew. % ergänzen,
(c) Auftragen des wässrigen Schlickers auf die Folie mittels Rakelauftrag, Walzenauftrag, Curtain Coating, Kiss Coating, Sprühverfahren oder Tauchverfahren zur Beschichtung der Trägerstruktur,
(d) Trocknen des wässrigen Schlickers unter Ausbildung einer Schicht auf der Trägerstruktur und Bildung des Batterieseparators sowie
(e) Abtrennen der Trägerstruktur vom Batterieseparator.

Das Verfahren zur Herstellung eines Batterieseparators zeichnet sich dadurch aus, dass eine Polymerfolie als stabilitätsgebende Komponente während der Prozessierung genutzt wird, welche auf den Prozess angepasste Oberflächeneigenschaften hinsichtlich Filmbildung und Ablösbarkeit besitzt und somit auch während des Prozesses aus Benetzbarkeitsgründen getauscht wird.

Die Herstellung nach diesem Verfahren erfolgt dabei vorzugsweise im Rollezu-Rolle-Verfahren aus wässriger Suspension über einen Nassauftrag mit zu erzielenden Schichtdicken von 0,01 - 1 mm. Hierzu sind angepasste Suspensionseigenschaften wie Viskosität und Feststoffanteil sowie ausreichende Homogenität notwendig, welche zum einen durch entsprechende Additive (Netzhilfsmittel, Stabilisatoren/Verdicker), zum anderen durch die hier entwickelte Prozessroute eingestellt werden.

Das Verfahren sieht einen Nassfilmauftrag auf eine Trägerfolie mit angepassten Oberflächeneigenschaften vor.

Die Filmbildung kann über verschiedene Verfahren erfolgen, wie Rakelauftrag, Walzenauftrag, Curtain Coating, Kiss Coating, Sprühen oder Tauchbeschichtung.

Die für die Prozessierung notwendige Reißfestigkeit und mechanische Integrität des Separators wird durch eine temporäre polymere Trägerfolie gewährleistet, die kurz vor der Batterieassemblierung entfernt wird.

Vorzugsweise erfolgt ein Übertrag des Separators während der Prozessierung von der "Prozessfolie" (optimiert für Filmbildung) auf eine "Lagerungsfolie" (optimiert für Ablösbarkeit). Dafür muss die Wechselwirkung zwischen Schlicker und Folie optimal eingestellt sein, sodass ein Kontaktwinkel zwischen dem Bindersystem und der Prozessfolie von höchstens 60° vorliegt und eine rückstandsfreie Ablösbarkeit des getrockneten/vernetzten Bindersystems gewährleistet ist.

Durch den Einsatz der temporären Trägerfolie wird keine Trägerstruktur aus beispielweise Glasfaserarchitektur oder Polymerseparator zur Aufnahme der Glaspartikel benötigt, sodass ein selbsttragender Glasseparator erhalten wird. Somit sind dünnere Strukturen als mit beispielweise Non-Woven Separatoren erzielbar.

Die zu verwendende Trägerfolie besteht dabei aus einem Material, welches eine Temperaturstabilität im gesamten Prozessfenster aufweist und eine mechanische Integrität bietet. Dazu zählen insbesondere eine ausreichende Zugfestigkeit, Flexibilität und geringe Dehnung für den Einsatz im Rolle-zu-Rolle-Verfahren. Ein Material, welches zu keiner Wasseraufnahme neigt, ist zu bevorzugen.

Die Einstellung der erforderlichen Porosität für die Anwendung erfolgt durch Entfernen einer wasserlöslichen Opferphase.

Ein mit diesem Verfahren hergestellter Batterieseparator besitzt eine hochflexible Struktur vorzugsweise aus Glaspartikeln und -fasern im Zusammenspiel mit einem polymerem Binder.

Es ist bevorzugt, dass der wässrige Schlicker
- von 5 bis 50 Gew.-%, bevorzugt von 10 bis 30 Gew.-% Glaskurzfasern (A) und/oder
- von 10 bis 60 Gew.-%, bevorzugt von 15 bis 30 Gew.-% Glaspartikel (B) und/oder
- von 5 bis 30 Gew.-%, bevorzugt von 10 bis 20 Gew.-% mindestens eines Binders (C)
- von 1 bis 10 Gew.-%, bevorzugt von 0,5 bis 5 Gew.-% mindestens eines Additivs (D) enthält,
wobei sich die Komponenten (A), (B), (C) und (D) und das Lösungsmittel Wasser auf 100 Gew. % ergänzen.

Die mechanischen und elektrochemischen Eigenschaften des späteren Separators können dabei über das Verhältnis Glaspartikel zu Binder eingestellt werden.

Eine bevorzugte Ausführungsform sieht vor, dass die Glaskurzfasern (A) aus einem nicht-biopersistentem Glas bestehen, wobei die Glaskurzfasern (A) bevorzugt einen Durchmesser von 0,1 bis 5 µm, besonders bevorzugt von 0,2 bis 2 µm aufweisen.

Es konnte festgestellt werden, dass bei der Verwendung von konventionellen Glasfasern der hohe Durchmesser der Glasfasern von üblicherweise nicht unter 10 µm neben einer Dickenerhöhung des Separators zu einer starken "Abschattung" der Elektroden führt, wodurch die aktiv zur Verfügung stehende Oberfläche der Elektrode gesenkt wird. Durch Verwendung von Glasfasern mit Durchmesser von 0,1 bis 5 µm (besonders bevorzugt < 1 µm) kann der Ladungsträgeraustausch mit dem Elektrolyten verbessert werden, was die erzielbare Lade- bzw. Entladegeschwindigkeit erhöht. Zur Wahrung der Arbeitssicherheit während der Separatorfertigung wird eine nicht-biopersistente Zusammensetzung der Glasfasern bevorzugt, welche im wasserfreien Batterieelektrolyten stabil ist. Eine geeignete nicht-biopersistente Silikatglas-Faser hat beispielsweise einen (Na₂O+K₂O+CaO+MgO+BaO)-Anteil größer 18 Gew.%.

Sofern die Glasfasern als Glasfaserbäusche vorliegen, ist eine Vorzerkleinerung bzw. Vereinzelung durch einen Mahlprozess notwendig. Im Anschluss an die Faservorbehandlung liegen Glaskurzfasern mit Faserlängen von 0,01 bis 2 mm vor, welche eine ausreichende Dispergierbarkeit im Bindersystem aufweisen.

Vorzugsweise enthalten die Glaspartikel (B) 64 bis 70 Gew.-% SiO₂, 0 bis 3 Gew.-% K₂O, 2 bis 5 Gew.-% B₂O₃, 1 bis 5 Gew.-% ZnO, 8 bis 13 Gew.-% Na₂O, 1 bis 4 Gew.-% MgO, 3 bis 7 Gew.-% CaO, 3 bis 6 Gew.-% Al₂O₃, 0 bis 3 Gew.-% TiO₂, wobei sich die Anteile der genannten Komponenten auf 100 Gew.-% ergänzen.

Besonders bevorzugt enthalten die Glaspartikel (B) 60 Gew.% SiO₂, 30 Gew.% Na₂O, 8 Gew.% P₂O₅, 2 Gew.% B₂O₃.

Weitere mögliche Silikatglas-Zusammensetzungen sind in WO 2018/185075 beschrieben.

Darüber hinaus ist der Einsatz von phosphathaltigen Gläsern für die Anwendung geeignet. Dazu zählen unter anderem folgende Zusammensetzungen:
57,1 Gew.-% P₂O₅
18,6 Gew.-% Na₂O
5,8 Gew.-% SiO₂
14,5 Gew.-% Al₂O₃
4 Gew.-% ZnO

Bei der Verwendung einer silikatfreien Rezeptur kann auch folgende Zusammensetzung verwendet werden:
65, 6 Gew.-% P₂O₅:
28,6 Gew.-% Na₂O: 28,6%
5,8 Gew.-% CaO

Es ist bevorzugt, dass die Glaspartikel (B) mindestens eine der folgenden Eigenschaften aufweisen:
- eine mittlere Dicke von 0,05 bis 10 µm, bevorzugt eine Dicke von 0,1 bis 5 µm und/oder
- eine mittlere Kantenlänge von 5 bis 500 µm, bevorzugt von 10 bis 200 µm und/oder
- ein Aspektverhältnis von 1 bis 2000, bevorzugt von 5 bis 100.

Diese Geometrie und Morphologie der Glaspartikel (Glasflakes) sind entscheidend für die Anpassung der elektrochemischen Eigenschaften des Batterieseparators.

Je nach Anwendungsfall und/oder Batterietyp ist entweder eine flache Ausrichtung der Glaspartikel bzw. Glasflakes erwünscht, um Barriere gegen Dendriten in Form einer Ziegelmauerstruktur zu bilden, oder eine Ausrichtung ohne Vorzugsrichtung zu bevorzugen, um die Ionenleitfähigkeit des Separators zu verbessern.

Durch die Verwendung eines hohen Glasanteils im Separator wird eine Temperaturstabilität bis 500 °C bei nahezu keiner Schrumpfung des Batterieseparators gewährleistet.

Es ist bevorzugt, dass der mindestens eine Binder (C) ausgewählt ist aus der Gruppe bestehend aus
- organisch-polymerbasierte Binder, insbesondere PVDF,
- wasserbasierte Binder, wie insbesondere modifizierte Cellulosen, insbesondere Carboxymethyl-Cellulose (CMC), Methyl Hydroxyethyl-Cellulose, Hydroxyethyl-Cellulose, Methylhydroxypropyl-Cellulose, Stärke, bevorzugt modifizierte Stärken, besonders bevorzugt kaltwasserlösliche Stärken, insbesondere Hydroxypropyl-Stärke, acetylierte Stärke, Phosphat-Stärke, oxidierte Stärke, Alginsäure, Styrol-Butadien-Kautschuk (SBR), Polyacryl-Säure (PAA), Polymethylmeatycrylsäure (PMMA), Styrol-Acrylate, Ethylen Vinylacetate, Vinylacetate. Polyurethane, sowie Copolymere aus den aufgeführten Polymere oder deren Mischungen, und
- Kombinationen hiervon

Die Zersetzungstemperatur des Binders sollte vorzugsweise deutlich über der von Polyolefinen liegen.

Der erfindungsgemäß eingesetzte Binder weist eine chemische Stabilität bezüglich des Batterieelektrolyten und dessen Lösemittel sowie elektrochemische Stabilität während des Betriebs von Batterien, insbesondere Lithium-lonen Batterien, im typischen Spannungsbereich von 0 - 5 V auf.

Darüber hinaus bietet der Binder auf die Batteriefertigung angepasste mechanische Eigenschaften wie Flexibilität, um eine Assemblierung im Wickelprozess zu ermöglichen.

Die eingesetzte Bindermenge ist dabei so anzupassen, dass ein Verschluss der Porosität des Batterieseparators durch überschüssigen Binder vermieden wird. Auf der anderen Seite ist eine ausreichende Menge an Binder notwendig, um eine sichere Einbindung der Glaspartikel und -fasern zu erreichen.

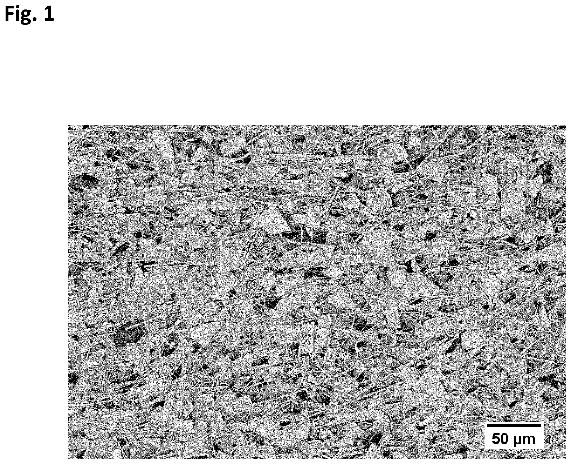

Das Verfahren dient zur Herstellung einer porösen Membran mit typischer Mikrostruktur (siehe Fig. 1) und Porosität im Bereich von 35 bis 60 %.

Erfindungsgemäß wird ebenso ein Batterieseparator bereitgestellt, der nach dem zuvor beschriebenen Verfahren herstellbar ist.

Weiterhin ist es bevorzugt, dass der Batterieseparator eine hohe Benetzung gegenüber einer Elektrolytflüssigkeit aufweist, insbesondere dass der Kontaktwinkel zwischen der Elektrolytflüssigkeit und dem Batterieseparator <30° beträgt, wobei die vollständige Benetzung bevorzugt innerhalb von weniger als 100 ms erfolgt.

Es ist bevorzugt, dass der Schrumpf des Batterieseparators, wenn dieser für 60 Minuten einer Temperaturen von 500 °C ausgesetzt wird, weniger als 2 % beträgt.

Der erfindungsgemäße Batterieseparator kommt somit ohne zusätzliche Trägerstruktur aus.

Die erfindungsgemäße Verwendung sieht vor, dass der erfindungsgemäße Batterieseparator in einer Batterie umfassend zumindest einen Elektrolyten und zumindest zwei Elektroden verwendet wird. Grundsätzlich können die erfindungsgemäßen Batterieseparatoren in allen Batterien eingesetzt werden, die Elektrolyten verwenden, gegen welche das enthaltene Glas beständig ist.

Dem Fachmann ist bekannt, dass, um die beschriebenen Eigenschaften zu erzielen, eine homogene Dispergierung der einzelnen Komponenten notwendig ist. Darüber hinaus sind die Verfahrens- und Materialparameter wie Viskosität der Suspension, Verarbeitungsgeschwindigkeit, Partikelgröße, Faserlänge abhängig von der zu erzielenden Batterieseparatordicke zu wählen.

Anhand der nachfolgenden Figuren und Beispiele soll der erfindungsgemäße Gegenstand näher illustriert und erläutert werden, ohne diesen auf die hier gezeigten spezifischen Ausführungsformen einzuschränken.

Fig. 1 zeigt eine mikroskopische Aufnahme einer Mikrostruktur des erfindungsgemäßen Separators gemäß Beispiel

### Beispiel

Es wurden kommerzielle erhältliche Glaspartikel (Glasflakes) mit einem bevorzugten D50 von 8-12 µm und Dicke von 0,9 - 1,3 µm eingesetzt, die folgenden Zusammensetzung aufwiesen:
SiO₂: 64 - 70%
K₂O: 0 - 3%
B₂O₃: 2 - 5%
ZnO: 1 - 5%
Na₂O: 8 - 13%
MgO: 1 - 4%
CaO: 3 - 7%
Al₂O₃: 3 - 6%
TiO₂: 0 - 3%

Die Schlickerformulierung erfolgte über die folgenden Schritte:
1. Bereitstellen von 460,83 g PEG-Lösung (5%ig)
2. 184,33 g Binderlösung (50%ig) und Mischen mit Dissolverscheibe bei ca. 800 U/min
3. Langsame Zugabe von 161,29 g Glaspartikel (Glasflakes) und weiteres Rühren bei ca. 800 U/min für ca. 5 Minuten
4. Langsame Zugabe von 69,12 g gemahlenen Glasfasern und weiteres Rühren bei mind. 1200 U/min für ca. 10 - 15 Minuten, anschließend Verringern der Drehzahl auf ca. 500 U/min
5. Zugabe von 4,61 g Benetzungshilfsmittel (bevorzugt in eine Trombe, zwecks besserer Verteilung) und Rühren für ca. 2 Minuten, Verringerung der Drehzahl auf ca. 300 U/min
6. Zugabe von 115,21g Polysaccharid-Lösung als Verdicker und Rühren für ca. 1 Minute
7. Zugabe von 4,61 g des Polyethersiloxan-Copolymer mit Kieselsäure als Entlüfter (bevorzugt wieder in die Trombenbildung), wodurch Mikroschaum und Mikroluftblasen ausgetrieben, bzw. an die Oberfläche transportiert werden. Anschließend kurzes Umrühren und Umfüllen in ein Becherglas.
8. Formulierung mittels Magnetrührer (sehr geringe Drehzahl, darf keine Trombe bilden) für ca. 2h rühren bzw. so lange bis die Formulierung komplett frei von Luftblasen ist)

Der Schlicker weist eine Viskosität im Scherratenbereich während der Verarbeitung im Bereich zwischen 0,1 und 1,0 Pa s auf.

Der Auftrag erfolgte mittels Curtain Coating, mit anschließender Trocknung bei 60 °C bis zur Verfestigung des Films. Anschließendes Auswaschen im Wasserbad für 30 s ermöglicht Porenbildung und Übertrag auf zweite PET-Folie. Trocknen bei 120 °C stabilisiert den Separator endgültig.

Die Herstellung der Separatoren erfolgt mit einem Verhältnis von Glas:Binder von 5:2 im getrockneten Zustand. Gerechnet wurde hier mit dem reinen Binder ohne Wasser als Lösemittel.

Der so hergestellte Separator hat eine Porosität von 35 bis 60 % und eine Dicke von 0,070 mm (70 µm).

Die resultierende Mikrostruktur ist in Fig. 1 dargestellt, die die Draufsicht auf die Oberfläche des selbsttragenden Glasseparators zeigt. Es ist eine gleichmäßige, durchgängige Schicht aus Glasfasern und Glaspartikeln zu erkennen, die keinen Verschluss der Poren zwischen den Partikeln zeigt. Dies bedeutet, dass kein übermäßiger Binderanteil vorliegt und weiterhin ausreichend Porosität gewährleistet ist.

## Patentansprüche

1. Verfahren zur Herstellung eines Batterieseparators aus einer selbsttragenden Struktur mit den folgenden Schritten:
(a) Bereitstellen einer Folie als Trägerstruktur
(b) Herstellen eines wässrigen Schlickers enthaltend oder bestehend aus:
(A) 1 bis 99 Gew.-% Glaskurzfasern,
(B) 1 bis 99 Gew.-% Glaspartikel mit einer mittleren Dicke von 0,05 µm bis 30 µm,
(C) 1 bis 35 Gew.-% mindestens eines Binders,
(D) 0 bis 15 Gew.-% mindestens eines Additivs
wobei sich die Komponenten (A), (B), (C) und (D) und das Lösungsmittel Wasser auf 100 Gew. % ergänzen,
(c) Auftragen des wässrigen Schlickers auf die Folie mittels Rakelauftrag, Walzenauftrag, Curtain Coating, Kiss Coating, Sprühverfahren oder Tauchverfahren zur Beschichtung der Trägerstruktur,
(d) Trocknen des wässrigen Schlickers unter Ausbildung einer Schicht auf der Trägerstruktur und Bildung des Batterieseparators sowie
(e) Abtrennen der Trägerstruktur vom Batterieseparator.

2. Verfahren nach Anspruch 1,
**dadurch gekennzeichnet, dass** der wässrige Schlicker
• von 5 bis 50 Gew.-%, bevorzugt von 5 bis 30 Gew.-% Glaskurzfasern (A) und/oder
• von 10 bis 60 Gew.-%, bevorzugt von 10 bis 30 Gew.-% Glaspartikel (B) und/oder
• von 5 bis 30 Gew.-%, bevorzugt von 5 bis 20 Gew.-% mindestens eines Binders (C) und
• von 0,1 bis 10 Gew.-%, bevorzugt von 0,5 bis 5 Gew.-% mindestens eines Additivs (D)
enthält, wobei sich die Komponenten (A), (B), (C) und (D) und das Lösungsmittel Wasser auf 100 Gew. % ergänzen.

3. Verfahren nach Anspruch 1 oder 2,
**dadurch gekennzeichnet, dass** die Glaskurzfasern (A) aus einem nicht-biopersistentem Glas bestehen, wobei die Glaskurzfasern (A) bevorzugt einen Durchmesser von 0,1 bis 5 µm, besonders bevorzugt von 0,2 bis 2 µm aufweisen.

4. Verfahren nach einem der vorhergehenden Ansprüche,
**dadurch gekennzeichnet, dass** die Glaspartikel (B) 64 bis 70 Gew.-% SiO₂, 0 bis 3 Gew.-% K₂O, 2 bis 5 Gew.-% B₂O₃, 1 bis 5 Gew.-% ZnO, 8 bis 13 Gew.-% Na₂O, 1 bis 4 Gew.-% MgO, 3 bis 7 Gew.-% CaO, 3 bis 6 Gew.-% Al₂O₃, 0 bis 3 Gew.-% TiO₂ enthalten, wobei sich die Anteile der genannten Komponenten auf 100 Gew.-% ergänzen.

5. Verfahren nach einem der Ansprüche 1 bis 3,
**dadurch gekennzeichnet, dass** die Glaspartikel (B) aus einem Silikatglas, insbesondere mit einem Gehalt an SiO₂ bezogen auf die Gesamtmasse der Glaspartikel (B) von 40 bis 65 Gew.-% und/oder einem Gehalt an B₂O₃ bezogen auf die Gesamtmasse der Glaspartikel (B) von 25 bis 40 Gew.-% und/oder einem Gehalt an Na₂O bezogen auf die Gesamtmasse der Glaspartikel (B) von 3 bis 10 Gew.-% und/oder einem Gehalt an Li₂O bezogen auf die Gesamtmasse der Glaspartikel (B) von 3 bis 10 Gew.-%, oder aus einem Phosphatglas bestehen.

6. Verfahren nach einem der vorhergehenden Ansprüche,
**dadurch gekennzeichnet, dass** die Glaspartikel (B) mindestens eine der folgenden Eigenschaften aufweisen:
• eine mittlere Dicke von 0,05 bis 10 µm, bevorzugt eine Dicke von 0,1 bis 5 µm und/oder
• eine mittlere Kantenlänge von 5 bis 500 µm, bevorzugt von 10 bis 200 µm und/oder
• ein Aspektverhältnis von 1 bis 2000, bevorzugt von 5 bis 100.

7. Verfahren nach einem der vorhergehenden Ansprüche, **dadurch gekennzeichnet, dass** der Batterieseparator verschiedene Glaspartikel (B) enthält, wobei ein Teil der Glaspartikel (B) hochschmelzend und der andere Teil der Glaspartikel (B) niedrigschmelzend ist, wobei die niedrigschmelzenden Glaspartikel im geschmolzenen Zustand die Poren der hochschmelzenden Glaspartikel infiltrieren und verschließen.

8. Verfahren nach einem der vorhergehenden Ansprüche,
**dadurch gekennzeichnet, dass** der mindestens eine Binder (C) ausgewählt ist aus der Gruppe bestehend aus
• organisch-polymerbasierte Binder, insbesondere PVDF,
• wasserbasierte Binder, wie insbesondere modifizierte Cellulosen, insbesondere Carboxymethyl-Cellulose (CMC), Methyl Hydroxyethyl-Cellulose, Hydroxyethyl-Cellulose, Methylhydroxypropyl-Cellulose, Stärke, bevorzugt modifizierte Stärken, besonders bevorzugt kaltwasserlösliche Stärken, insbesondere Hydroxypropyl-Stärke, acetylierte Stärke, Phosphat-Stärke, oxidierte Stärke, Alginsäure, Styrol-Butadien-Kautschuk (SBR), Polyacryl-Säure (PAA), Polymethylmeatycrylsäure (PMMA), Styrol-Acrylate, Ethylen Vinylacetate, Vinylacetate. Polyurethane, sowie Copolymere aus den aufgeführten Polymere oder deren Mischungen, und
• Kombinationen hiervon.

9. Batterieseparator nach einem der vorhergehenden Ansprüche, **dadurch gekennzeichnet, dass** die Additive ausgewählt sind aus der Gruppe bestehend aus
• Konservierungsmittel, insbesondere aus der Gruppe der Isothiazolinone, aus der Gruppe der Pyrithione , aus der Gruppe der Imidazole, aus der Gruppe der Carbamate, aus der Gruppe der konservierenden Lösungsmittel,
• Rheologiehilfsmittel, insbesondere Acrylatverdicker, Celluloseverdicker, Polyurethanverdicker, Verdicker auf Harnstoff oder Polyharnstoff Basis, polymere Zucker oder aus der Gruppe der natürlichen und synthetischen Schichtsilikate,
• Netzmittel, insbesondere Tenside aus der Gruppe der nichtionischen, anionischen oder kationischen Tenside,
• Entschäumer, insbesondere Entschäumer auf Mineralölbasis; aus der Gruppe der Phosphate und Polyphosphate oder aus der Gruppe der Siloxane,
• Dispergierhilfsmittel, insbesondere Polyelektrolyte wie Polyacrylate, Polyphophate und deren Salze, Tenside aus der Gruppe der nichtionischen, anionischen oder kationischen Tenside, insbesondere niedermolekulare Polymere oder hochmolekulare Polymere sein,
• Mischungen hiervon

10. Batterieseparator herstellbar nach dem Verfahren nach einem der vorhergehenden Ansprüche.

11. Batterieseparator nach dem vorhergehenden Anspruch,
**dadurch gekennzeichnet, dass** der Batterieseparator eine hohe Benetzung gegenüber einer Elektrolytflüssigkeit aufweist, insbesondere beträgt der Kontaktwinkel zwischen der Elektrolytflüssigkeit und dem Batterieseparator <30°, wobei die vollständige Benetzung bevorzugt innerhalb von weniger als 100 ms erfolgt.

12. Batterieseparator nach einem der Ansprüche 9 oder 10,
**dadurch gekennzeichnet, dass** der Schrumpf des Batterieseparators, wenn dieser für 60 Minuten einer Temperaturen von 500 °C ausgesetzt wird, weniger als 2 % beträgt.

13. Batterieseparator nach einem der Ansprüche 9 bis 11,
**dadurch gekennzeichnet, dass** der Batterieseparator keine zusätzliche Trägerstruktur aufweist.

14. Verwendung eines Batterieseparators gemäß einem der Ansprüche 9 bis 13 in einer Batterie umfassend zumindest einen Elektrolyten und zumindest 2 Elektroden.

15. Verwendung gemäß Anspruch 14, **dadurch gekennzeichnet, dass** Natrium- und/oder Lithiumionen aus den Glaspartikeln (B) im Elektrolyten lösbar sind.
